# EUROPEAN PATENT APPLICATION

(11) **EP 4 523 829 A1**
(43) Date of publication of application: **19.03.2025**
(21) Application number: 23855844.9
(22) Date of filing: 18.08.2023
(51) Int. Cl.: B23K 20/10

(54) **HORN TIP AND ULTRASONIC BONDING DEVICE**

(30) Priority: 22.08.2022 JP 2022131519
(71) Applicant: Link-US Co., Ltd., Yokohama-shi, Kanagawa 222-0033 (JP)
(72) Inventor: SATO, Yuichiro, Yokohama-shi, Kanagawa 222-0033 (JP)
(74) Representative: Schön, Christoph
(86) International application number: PCT/JP2023/029882
(87) International publication number: WO 2024/043192

(57) **Abstract**

A horn tip that can be easily and reliably attached to an ultrasonic bonding device and stably operates during bonding is provided. A horn tip 6 includes a bottom plate part 6a and a bonding part 6b, the bottom plate part 6a being provided with a plurality of through-holes 61 and 62 for attachment to an ultrasonic LT horn 4, the bonding part 6b protruding vertically from the bottom plate part 6a. A ratio h/w of a length h of the bonding part 6b from an upper surface side of the bottom plate part 6a to a thickness w of the bonding part 6b is equal to or smaller than 1.5.

## Description

### Technical Field

The present invention relates to a horn tip used for ultrasonic bonding and an ultrasonic bonding device to which the horn tip is attached when used.

### Background Art

Conventionally, various kinds of horn tips with different outer shapes or bonding surface shapes have been available for an ultrasonic bonding device so that an optimum horn tip can be selected in accordance with bonding target workpieces or bonding conditions.

For example, in an ultrasonic bonding device of Patent Literature 1, a tip member can be freely coupled to and decoupled from an ultrasonic horn for a wide tip. When the tip member is attached to the horn, a taper part and guide part of the tip member are inserted into a first hole and a second hole of a tip member attachment hole from below the horn and a screw member is inserted into a third hole of the tip member attachment hole from above the horn, and the screw member is fastened from above the horn (refer to Patent Literature 1).

### Citation List

### Patent Literature

Patent Literature 1: Japanese Patent Laid-open No. 2022-16741

### Summary of Invention

### Technical Problem

However, in the device of Patent Literature 1, the first to third holes need to be formed in the ultrasonic horn to reliably fix the tip member, and work and cost were required for their fabrication. Furthermore, depending on the shape of the tip member, a screw loosens and slips against an attachment part during bonding in some cases, and thus a structure that allows reliable attachment has been desired.

The length from the base to a tip part of the tip member is related to the natural frequency of the tip member. Depending on the natural frequency of the tip member, the tip member and the ultrasonic horn displace in directions opposite to each other, and accordingly, the bottom surface of the tip member lifts from the attachment part during bonding, affecting the bonding accuracy.

The present invention has been made in view of such circumstances and intended to provide a horn tip that can easily and reliably be attached to an ultrasonic bonding device and ensures stable bonding.

### Solution to Problem

To achieve the above-described intention, a first invention is a horn tip used to bond workpieces by ultrasonic bonding, the horn tip comprising a bottom plate part provided with a plurality of through-holes for passing screws and a bonding part vertically protruding from the bottom plate part, in which a ratio h/w of a length h of the bonding part from an upper surface side of the bottom plate part to a thickness w of the bonding part is equal to or smaller than 1.5.

The horn tip of the present invention is attached to an ultrasonic horn by screws through the plurality of through-holes of the bottom plate part, and thus can reliably be fixed. The bonding part vertically protruding from the bottom plate part is used to bond workpieces.

The ratio h/w of the length h of the bonding part from the upper surface side of the bottom plate part to the thickness w of the bonding part of the horn tip may be equal to or smaller than 1.5. The natural frequency of the horn tip and the natural frequency of the ultrasonic horn can be differentiated from each other by setting the thickness w and the length h of the bonding part to this ratio, and thus resonance between a tip member and the ultrasonic horn during workpiece bonding can be avoided. Accordingly, workpiece bonding can be stably performed.

In the horn tip of the first invention, the bonding part preferably protrudes vertically from one end edge extending in a longitudinal direction of the bottom plate part.

With this configuration, such a horn tip (substantially L-shaped column shape) with the bonding part protruding vertically from the end edge of the bottom plate part can be relatively easily fabricated, and it is possible to form the bottom plate part larger than the bonding part, thereby increasing the freedom of the number and disposition of through-holes.

The horn tip of the first invention preferably comprises a thickened part having a thickness that gradually increases from the bottom plate part toward a base end part continuous with the bonding part.

Since the thickened part is provided at a part formed by the bottom plate part and the bonding part of the horn tip, the bonding part does not wobble during bonding of workpieces, which allows stable bonding of the workpieces.

In the horn tip of the first invention, the bottom plate part is preferably provided with a groove part on a lower surface side that contacts a surface of the ultrasonic horn.

In a case where the contact area between the horn tip and the ultrasonic horn is large, force from screw fastening disperses and rubbing occurs at the contact surface by ultrasonic vibration. Accordingly, frictional heat due to ultrasonic vibration increases, but generation of frictional heat can be reduced since the groove part is provided on the lower surface side of the horn tip.

An ultrasonic bonding device of a second invention comprises: a horn tip comprising a bottom plate part and a bonding part, the bottom plate part being provided with a plurality of through-holes for passing screws, the bonding part vertically protruding from the bottom plate part, a length of the bonding part from an upper surface side of the bottom plate part being equal to or smaller than half of a resonant length; and an ultrasonic horn to which the horn tip can be attached, in which at least one side surface of a tip part of the ultrasonic horn is provided with screw holes corresponding to the through-holes of the horn tip.

The ultrasonic bonding device of the present invention comprises a tip part corresponding to the same horn tip as the first invention. Screw holes in a number corresponding to the through-holes of the horn tip are provided at the same intervals in the tip part, which allows combined use.

In the ultrasonic bonding device of the second invention, the tip part preferably has a rectangular column shape.

With this configuration, it is possible to reliably fix both members by attaching the horn tip to a side surface of the rectangular column-shape with screws.

In the ultrasonic bonding device of the second invention, the bonding part preferably protrudes vertically from one end edge extending in a longitudinal direction of the bottom plate part, and an end face of the tip part and an end face of the bonding part of the horn tip are preferably flush.

In the present invention, the horn tip is attached such that the end face of the tip part of the ultrasonic horn is flush with an end part of a bonding surface of the horn tip in a substantially L-shaped column shape. Accordingly, it is possible to easily perform positioning of the horn tip and the workpieces during bonding.

In the ultrasonic bonding device of the second invention, the screw holes are preferably provided at positions where stress is lower than at a central part of the tip part in an axial direction.

This stress is force generated due to expansion and contraction of the ultrasonic horn by ultrasonic vibration, and the stress is high and the amount of expansion and contraction is large at the central part of the ultrasonic horn. Accordingly, deformation of the screw holes is large. However, expansion, contraction, and deformation due to ultrasonic vibration are small for screw holes provided at positions where the stress is lower than at the central part. Thus, screws that fix the horn tip do not loosen, which enables reliable fixation of the horn tip.

In the ultrasonic bonding device of the second invention, a surface of the tip part where the horn tip is attached is preferably provided with a convex part that prevents the horn tip from shifting relative to the tip part.

With this configuration, the horn tip is prevented from shifting by the convex part provided at the tip part of the ultrasonic horn, and thus it is possible to prevent the position of the horn tip from shifting during bonding of the workpieces, which would otherwise degrade the bonding accuracy.

In the ultrasonic bonding device of the second invention, it is preferable that a vibration adjustment member can be detachably attached to any of the screw holes, which is provided at a position where the screw hole does not interfere with the horn tip.

The vibration adjustment member can be attached to any of the screw holes provided in the ultrasonic horn, which is provided at a position where the screw hole does not interfere with the horn tip. It is possible to increase the bonding accuracy of the workpieces by adjusting and equalizing the vibration amplitude at both ends of the ultrasonic horn by using the vibration adjustment member.

### Brief Description of Drawings

FIG. 1 is a diagram for description of the entire configuration of an ultrasonic bonding device according to an embodiment of the present invention.
FIG. 2 is a perspective view of an ultrasonic LT horn.
FIG. 3A is a perspective view (upper surface side) of a horn tip.
FIG. 3B is a perspective view (lower surface side) of the horn tip.
FIG. 4 is a perspective view of a horn tip (with cutouts).
FIG. 5 is a perspective view of a horn tip (with a thickened part).
FIG. 6A is a perspective view of a horn tip (T-shaped type).
FIG. 6B is a side view of the horn tip (T-shaped type) when attached to the ultrasonic LT horn.
FIG. 7A is a perspective view (upper surface side) of a horn tip (three through-holes).
FIG. 7B is a perspective view (lower surface side) of the horn tip (three through-holes).
FIG. 8A is a perspective view of a horn tip (deformed T-shaped type).
FIG. 8B is a side view of the horn tip (deformed T-shaped type) when attached to the ultrasonic LT horn.
FIG. 9 is a perspective view of a horn tip (with ribs and protrusions).
FIG. 10 is a side view of a horn tip when attached to the ultrasonic LT horn.
FIG. 11 is a diagram for description of the length of a bonding part of the horn tip.
FIG. 12(a) is a diagram illustrating the horn tip with a length L (resonant length). FIG. 12(b) is a diagram illustrating the horn tip with a length of L/2 to L. FIG. 12(c) is a diagram illustrating the horn tip with a length of L/2. FIG. 12(d) is a diagram illustrating the horn tip with a length of L/3.
FIG. 13 is a diagram for description of the attachment position of the horn tip in an axial direction of the ultrasonic LT horn.
FIG. 14A is a side view of the horn tip when attached to the ultrasonic LT horn (tip part: embodiment).
FIG. 14B is a diagram for detailed description of the tip part of the ultrasonic LT horn in FIG. 14A.
FIG. 15A is a side view of the horn tip when attached to the ultrasonic LT horn (tip part: modification).
FIG. 15B is a diagram for detailed description of the tip part of the ultrasonic LT horn in FIG. 15A.
FIG. 16 is a diagram for description of the ultrasonic bonding device with a balancer attached to the tip part of the ultrasonic LT horn.

### Description of Embodiment

An embodiment of an ultrasonic bonding device of the present invention will be described below with reference to the accompanying drawings.

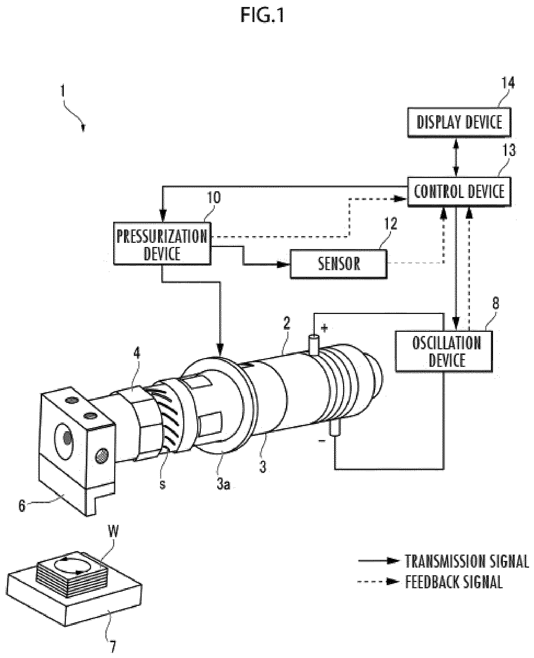

First, the entire configuration of an ultrasonic bonding device 1 according to the embodiment of the present invention will be described with reference to FIG. 1. The ultrasonic bonding device 1 is a device that welds bonding target objects (workpieces) such as metal plates by using ultrasonic complex vibration to be described later. The ultrasonic bonding device 1 is primarily used for bonding electrodes of a lithium ion battery or a semiconductor element and for bonding metals of the same kind or different kinds.

The ultrasonic bonding device 1 comprises an ultrasonic oscillator (Langevin Type) 2, an ultrasonic booster horn 3, an ultrasonic LT horn 4, a horn tip 6, and an anvil 7. In addition, an oscillation device 8, a pressurization device 10, a sensor 12, a control device 13, and a display device 14 are parts of the ultrasonic bonding device 1.

When power voltage is applied from a power source (not illustrated) to the oscillation device 8, a voltage signal is transferred to + and - electrodes of the ultrasonic oscillator 2, the ultrasonic oscillator 2 vibrates, and ultrasonic vibration (approximately 20 kHz) is generated. The ultrasonic vibration generated in the ultrasonic oscillator 2 is transferred to the cylindrical ultrasonic booster horn 3 attached to one end part of the ultrasonic oscillator 2, and the vibration amplitude is amplified. The ultrasonic vibration is further transferred to the cylindrical ultrasonic LT horn 4 attached to one end part of the ultrasonic booster horn 3 (end part on a side that is not the ultrasonic oscillator 2).

The ultrasonic vibration generated in the ultrasonic oscillator 2 is transferred in the long axis direction of the ultrasonic booster horn 3 and the ultrasonic LT horn 4 (longitudinal vibration of ultrasonic wave), and a vibration component converted from a longitudinal vibration into a transverse vibration is generated by a plurality of diagonal slits S of the ultrasonic LT horn 4. Then, the ultrasonic vibration (complex vibration) is transferred to the horn tip 6 fastened with screws to one end part of the ultrasonic LT horn 4 (end part on a side that is not the ultrasonic booster horn 3).

The horn tip 6 comprises a tip part that contacts one workpiece W positioned uppermost among a plurality of workpieces W (for example, a plurality of flat plate workpieces stacked in the thickness direction) during bonding of the plurality of workpieces W. During the bonding, the control device 13 adjusts the phase and amplitude of longitudinal and torsional vibrations of ultrasonic vibration to generate the complex vibration (for example, elliptical vibration) at the one end part of the ultrasonic LT horn 4, and accordingly, the tip part of the horn tip 6 vibrates in an elliptical trajectory on the surface of the upper workpiece W.

This vibration removes impurities from the surface of the workpiece W and further promotes plastic deformation of the surface of the workpiece W. Note that the horn tip 6 is replaceable in accordance with the kind of the workpiece W, but in this example, a horn tip having a substantially L-shaped plate shape or a substantially L-shaped column shape as illustrated in FIG. 1 and having a substantially quadrilateral bonding surface that contacts the workpiece W is used.

As a supplementary comment, the complex vibration is vibration that combines, when the tip part of the horn tip 6 presses the upper workpiece W, a vibration component in a first direction perpendicular to the pressing direction and a vibration component in a second direction orthogonal to the first direction. The complex vibration is circular vibration when the vibration component in the first direction and the vibration component in the second direction have a phase difference of 90° and an amplitude ratio of 1:1. The complex vibration is elliptical vibration when the phase difference is 90° and the amplitude ratio is N:1 (N > 1; for example, N =2).

A pressurization block (not illustrated) with high stiffness is in contact with a flange part 3a of the ultrasonic booster horn 3. Thus, the pressurization device 10 can be controlled by the control device 13 to vertically move the ultrasonic bonding device 1 through the pressurization block operating upward and downward.

When the workpieces W are placed on the anvil 7 as a base, a bonding part 6b of the horn tip 6 contacts the upper workpiece W and static pressure (200 to 800 [N/m2] during bonding) from the bonding part 6b is applied to the workpiece W.

Typically, the bonding strength increases when the static pressure is set to be high, but when the static pressure is set to be too high, the workpieces W are damaged, which leads to fractures and cracks. However, when the static pressure is low at start of bonding, the horn tip 6 cannot grip the upper workpiece W and the upper workpiece W slips, which prevents proper bonding.

Methods of generating the static pressure include a method of pressing the anvil 7 and the lower workpiece W upward from below with an air cylinder, a spring, or the like and a method of pressing the upper workpiece W downward from above by controlling the position and (or) displacement speed of the horn tip 6 with a servomotor, and the latter is employed in the present embodiment.

In addition, the sensor (stroke sensor) 12 that detects displacement of the pressurization block is provided, and the control device 13 acquires the pressing amount (indentation amount) of the workpieces W by the horn tip 6. The sensor 12 transmits coordinate change of the horn tip 6 in the vertical direction during bonding to the control device 13, and the control device 13 feedback-controls the pressing amount of the workpieces W by the horn tip 6 based on the coordinate change so that the pressing amount is maintained constant. Thus, an actuator with a fast response speed for a feedback control signal transmitted from the control device 13 is preferably used in the pressurization device 10.

A target value or temporal change mode of the pressing amount of the workpieces W by the horn tip 6 may be set in advance through the display device 14 by a worker of the ultrasonic bonding device 1. As described above, during workpiece bonding, providing the complex vibration while adjusting the pressing amount and/or the static pressure reliably promotes bonding (solid-phase bonding).

Supplementary description of the solid-phase bonding is as follows: for example, metal atoms have surfaces covered with grease and/or an oxide layer, which prevent the atoms from approaching each other. In ultrasonic bonding, ultrasonic vibration is applied to metal to generate strong frictional force on the metal surface. Accordingly, an oxide layer and the like on the metal surface are removed, revealing clean and activated metal atoms at the bonding surface.

In this state, when ultrasonic vibration is further applied to the metal surface, temperature rise due to frictional heat increases atomic motion and mutual attractive force between atoms is generated, and accordingly, a solid-phase bonding state is created.

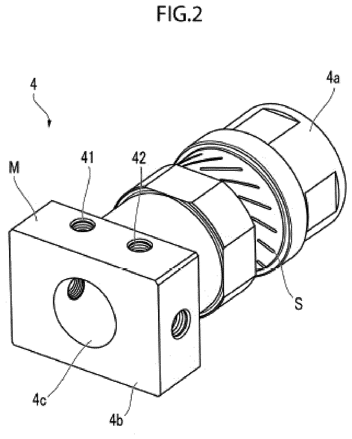

Details of the ultrasonic LT horn 4 of the present embodiment will be described below with reference to FIG. 2.

The ultrasonic LT horn 4 illustrated in FIG. 2 is constituted by a cylindrical part 4a including the diagonal slits S, and a tip part 4b having a rectangular column shape. The tip part 4b has a horizontally long rectangular shape when viewed from the front but may be formed in a square or octagonal shape.

Two screw holes 41 and 42 disposed horizontally apart from each other for attaching the horn tip 6 are provided in a horizontally long surface (attachment surface M) of the tip part 4b of the ultrasonic LT horn 4. Note that during fabrication with the ultrasonic bonding device 1, the attachment surface M faces vertically downward (in the direction of the anvil 7) (refer to FIG. 1).

The screw holes 41 and 42 of the tip part 4b are female thread grooves and provided corresponding to through-holes 61 and 62 of the horn tip 6 to be described later. By providing the plurality of screw holes 41 and 42 and fixing the horn tip 6, it is possible to prevent the horn tip 6 from rotating relative to the tip part 4b during bonding of the workpieces W with which the horn tip 6 is in contact. Note that a circular hole 4c when viewed from the front is provided at the tip part 4b of the ultrasonic LT horn 4 but is not an essential component.

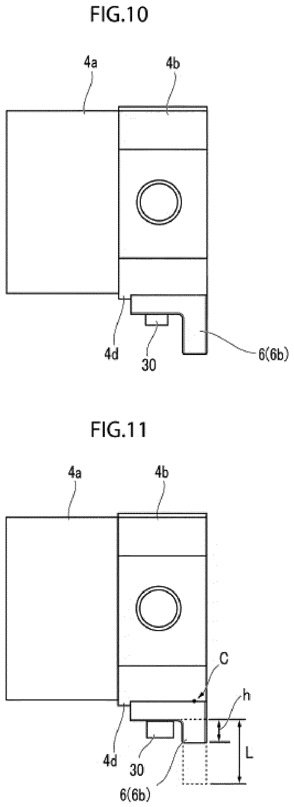

The attachment surface M is preferably sandblasted to prevent the horn tip 6 from slipping relative to the tip part 4b. Three or more screw holes disposed horizontally apart from each other may be provided in the attachment surface M of the tip part 4b of the ultrasonic LT horn 4. In addition, a convex part 4d (refer to FIG. 10) that prevents the horn tip 6 from shifting relative to the tip part 4b may be provided.

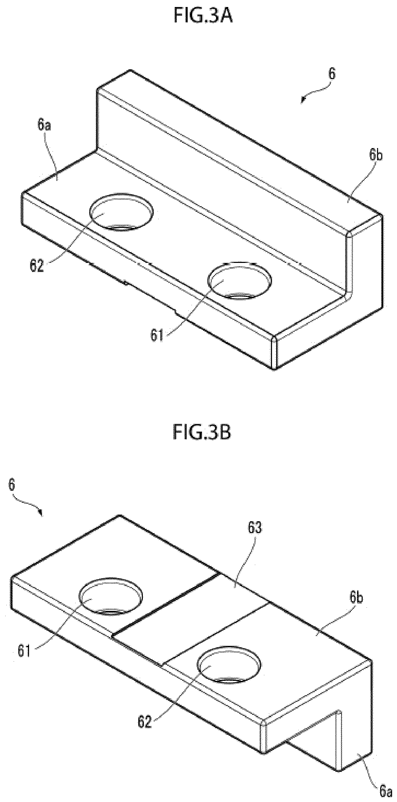

The horn tip 6 used for the ultrasonic bonding device 1 will be described below with reference to FIGS. 3A and 3B.

As illustrated in FIG. 3A, the horn tip 6 having a substantially L-shaped plate shape or a substantially L-shaped column shape is constituted by a bottom plate part 6a and the bonding part 6b, the bottom plate part 6a having a substantially quadrilateral plate shape and being provided with the two through-holes 61 and 62 disposed longitudinally apart from each other for attaching to the ultrasonic LT horn 4, the bonding part 6b having a substantially quadrilateral plate shape and vertically protruding from one long side edge part of the bottom plate part 6a.

In other words, the horn tip 6 is formed in a substantially L-shaped plate shape or substantially L-shaped column shape having a substantially L-shaped sectional shape orthogonal to the longitudinal direction. The horn tip 6 having an L-shaped column shape can be relatively easily fabricated, and the bottom plate part 6a is a flat plate having a relatively large area among two flat plates included in the horn tip 6. Thus, it is possible to increase the area of the bottom plate part 6a, thereby increasing the freedom of the number and disposition of the through-holes 61 and 62 of the horn tip 6.

The through-holes 61 and 62 are holes formed with no thread grooves and correspond to the interval between the screw holes 41 and 42 of the ultrasonic LT horn 4 (tip part 4b), and the diameters of the holes are slightly larger than those of the screw holes 41 and 42. The bonding part 6b has a rectangular plane serving as a contact surface with the upper workpiece W. The shape of the contact surface may be elliptical or the like, and the contact surface may be provided with a plurality of protrusions or recessed parts.

FIG. 3B illustrates the lower surface side (side that contacts the ultrasonic LT horn 4) of the bottom plate part 6a of the horn tip 6. The lower surface side of the bottom plate part 6a is a polished flat surface and provided with, at a central part in the longitudinal direction, a groove part 63 that extends entirely in the transverse direction and does not contact the surface of the ultrasonic LT horn 4.

In a case where the contact area between the ultrasonic LT horn 4 and the bottom plate part 6a is large, force from screw fastening disperses and rubbing occurs at the contact surface by ultrasonic vibration, and accordingly, frictional heat due to ultrasonic vibration increases. Thus, the contact area between the ultrasonic LT horn 4 and the bottom plate part 6a is reduced only at the groove part 63 so that force from screw fastening is concentrated to reduce generation of frictional heat. The groove part 63 may be formed to extend in the longitudinal direction of the lower surface side of the bottom plate part 6a or may be constituted by combination of continuous or independent grooves extending in the transverse direction and the longitudinal direction.

The flat surface of the bottom plate part 6a other than the groove part 63 may be sandblasted to reduce slipping between the bottom plate part 6a and the workpieces W during bonding of the workpieces W. In addition, the flat surface may be provided with nitride film processing to prevent sticking to the ultrasonic LT horn 4 or rust generation. Moreover, edges of the flat surface may be rounded or chamfered to prevent abrasion of the ultrasonic LT horn 4 and/or the horn tip 6 (bottom plate part 6a).

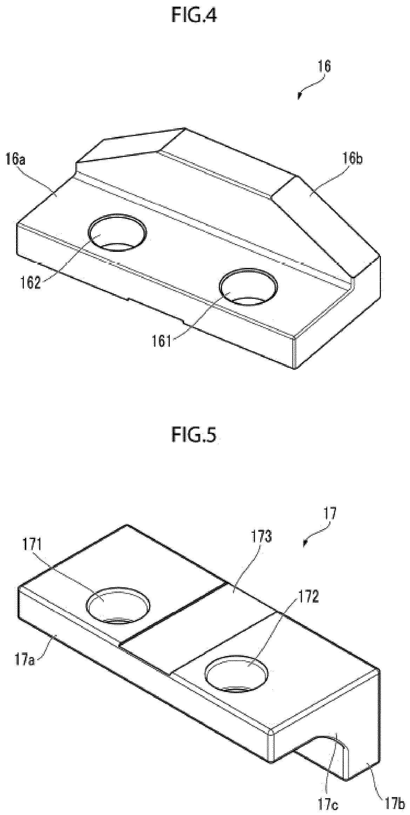

As with a horn tip 16 illustrated in FIG. 4, the contact surface may be a small rectangular plane with cut-out end parts of a bonding part 16b. As with a horn tip 17 illustrated in FIG. 5, a thickened part 17c that gradually increases the thickness of the bottom plate part 17a in a positively exponential or quadratic manner may be provided from a middle place of a bottom plate part 17a in the transverse direction toward a base end part continuous with a bonding part 17b.

In FIG. 5, through-holes 171 and 172 disposed longitudinally apart from each other in the bottom plate part 17a are formed to penetrate through the bottom plate part 17a in the thickness direction, avoiding the thickened part 17c. The thickened part 17c of the horn tip 17 is a part that gradually increases the thickness of the bottom plate part 17a in a positively exponential or quadratic manner from a middle place of the bonding part 17b in the transverse direction toward a base end part continuous with the bottom plate part 17a.

With the thickened part 17c, wobbling of the bonding part 17b relative to the bottom plate part 17a during bonding of the workpieces W is reduced so that the workpieces W can be bonded while alignment of the bonding part 17b with the workpieces W is stably maintained. Note that, similarly to the horn tip 6, a groove part 173 extending in the transverse direction is provided on the lower surface side.

The thickened part is not limited to the shape illustrated in FIG. 5. The thickened part may be formed to gradually increase the thickness of the bottom plate part 17a linearly or in a negatively exponential manner from a middle place of the bottom plate part 17a in the transverse direction toward a base end part continuous with the bonding part 17b.

The through-holes 171 and 172 may be formed to at least partially penetrate through the thickened part 17c of the bottom plate part 17a in the thickness direction. The thickened part 17c may be formed to gradually increase the thickness of the bottom plate part 17a from a tip place of the bottom plate part 17a toward a tip place of the bonding part 17b.

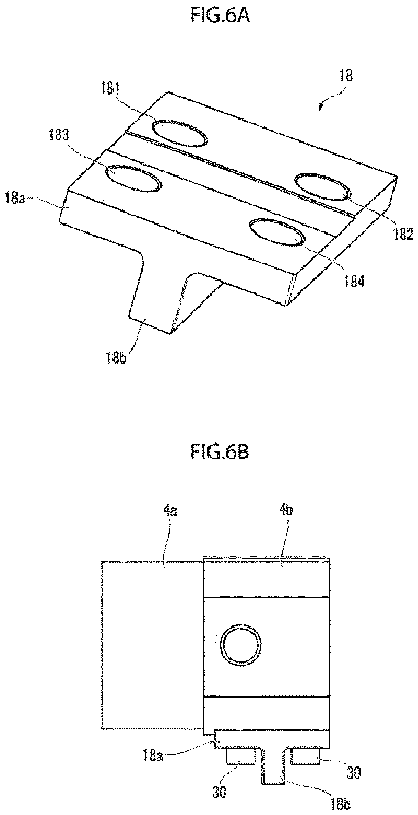

The shape of a horn tip is not limited to L shapes. A horn tip 18 having a substantially T-shaped plate shape or a substantially T-shaped column shape as illustrated in FIG. 6A may be used for the ultrasonic bonding device 1. The horn tip 18 comprises a bonding part 18b vertically protruding from substantially the center of a bottom plate part 18a in the transverse direction, and through-holes 181 to 184 are provided on both sides of the bonding part 18b.

FIG. 6B is a side view of the horn tip 18 when attached to the ultrasonic LT horn 4. As illustrated in FIG. 6, the horn tip 18 is fixed to the ultrasonic LT horn 4 by screws 30 on both sides of the bonding part 18b. Thus, it is possible to reduce wobbling of the horn tip 18 relative to the ultrasonic LT horn 4 during bonding of the workpieces W, thereby stably maintaining the contact state of the horn tip 18 with the workpieces W while bonding the workpieces W.

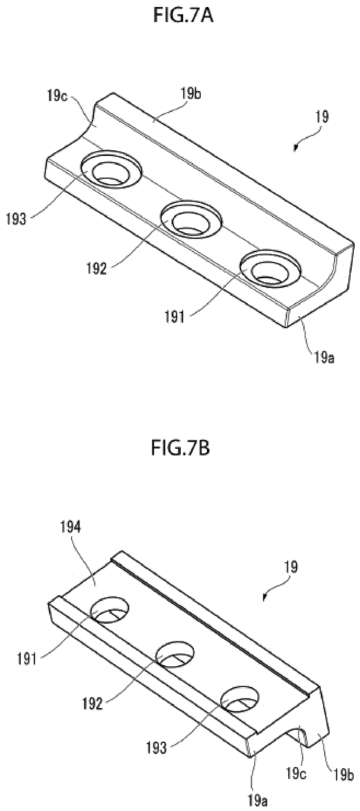

In addition, horn tips in various shapes can be thought. A horn tip 19 illustrated in FIG. 7A is constituted by a bottom plate part 19a and a bonding part 19b, the bottom plate part 19a having a substantially quadrilateral plate shape and being provided with three through-holes 191, 192, and 193 disposed horizontally or longitudinally apart from one another, the bonding part 19b extending entirely along one long side edge part of the bottom plate part 19a and protruding in a direction orthogonal to the bottom plate part 19a.

The horn tip 19 can be attached to an ultrasonic LT horn comprising a tip part provided with three screw holes. According to this aspect, the horn tip 19 is solidly fixed to the ultrasonic LT horn 4, and thus a gap is unlikely to be generated between the horn tip 19 and the ultrasonic LT horn (tip part), which stabilizes fixation to the ultrasonic LT horn 4 as compared to a horn tip with two through-holes.

As illustrated in FIG. 7A, the horn tip 19 comprises a thickened part 19c that gradually increases the thickness of the bottom plate part 19a in an exponential or quadratic manner from a middle place of the bottom plate part 19a in the transverse direction toward a base end part continuous with the bonding part 19b. Thus, it is possible to reduce wobbling of the horn tip 19 relative to the ultrasonic LT horn 4 during bonding of the workpieces W, thereby stably maintaining the contact state of the horn tip 19 with the workpieces W while bonding the workpieces W.

FIG. 7B illustrates the lower surface side (side that contacts the ultrasonic LT horn) of the bottom plate part 19a. The lower surface side of the bottom plate part 19a is a polished flat surface and provided with a groove part 194 that extends entirely in the longitudinal direction and does not contact the surface of the ultrasonic LT horn at a central part in the transverse direction. Since the contact area is reduced only at the groove part 194, it is possible to reduce generation of frictional heat between the ultrasonic LT horn 4 and the horn tip 19.

Force from screw fastening is concentrated on a flat surface extending in the longitudinal direction, which enhances the effect of preventing slipping between surfaces. The flat surface may be provided with nitride film processing to prevent bonding between the lower surface side of the bottom plate part 19a and the surface of the ultrasonic LT horn (tip part). Moreover, part of the flat surface may be shaved to the height of the groove part 194, thereby further reducing the contact area.

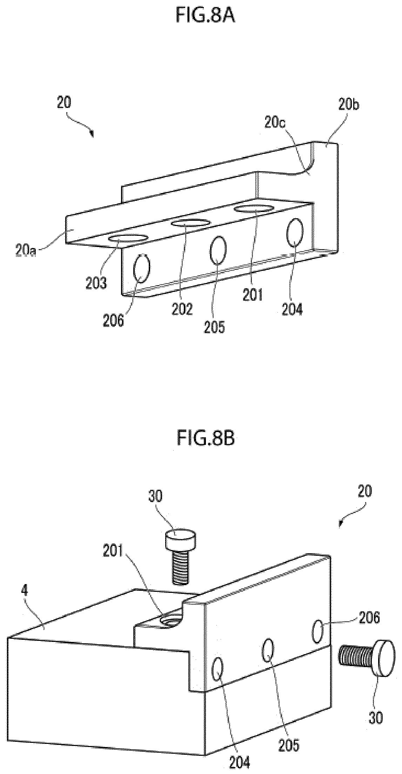

A horn tip 20 illustrated in FIG. 8A is constituted by a bottom plate part 20a and a bonding part 20b (deformed T-shaped type), the bottom plate part 20a having a substantially quadrilateral shape and being provided with three through-holes 201, 202, and 203 disposed horizontally apart from each other, the bonding part 20b extending entirely in the longitudinal direction at a central part of the bottom plate part 20a in the transverse direction and protruding in the perpendicularly up-down direction relative to the bottom plate part 20a. A thickened part 20c that gradually increases the thickness of the bottom plate part 20a in an exponential or quadratic manner from a middle place of the bottom plate part 20a in the transverse direction toward a base end part continuous with the bonding part 20b is provided on the upper side of the bonding part 20b with respect to the bottom plate part 20a.

In addition, three through-holes 204, 205, and 206 are provided on the lower side of the bonding part 20b with respect to the bottom plate part 20a. As illustrated in FIG. 8B, the horn tip 20 is placed at an end part of the ultrasonic LT horn 4 (tip part) and fixed to the ultrasonic LT horn 4 by the screws 30 through the through-holes 201 to 206. Since the horn tip 20 is fixed in two directions, it is possible to reliably prevent slipping of the contact surface between the lower surface side of the bottom plate part 20a and the ultrasonic LT horn 4.

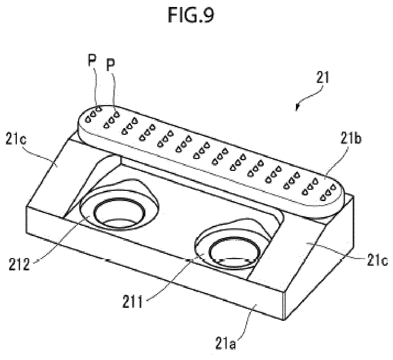

A horn tip 21 illustrated in FIG. 9 is constituted by a bottom plate part 21a and a bonding part 21b, the bottom plate part 21a being provided with two through-holes 211 and 212 disposed horizontally apart from each other, the bonding part 21b extending entirely in the longitudinal direction at a central part of the bottom plate part 21a in the transverse direction and being placed at an end part of the bottom plate part 21a. The bottom plate part 21a comprises ribs 21c that rise toward the bonding part 21b at respective end parts in the transverse direction.

Each rib 21c is a thickened part having a thickness that gradually and linearly increases from an end edge of the bottom plate part 21a in the longitudinal direction toward a base end part continuous with the bonding part 21b. Since the ribs 21c are provided, it is possible to prevent vibrations of end parts of the bottom plate part 21a in opposite phases and significant vibrations of corners of the end parts in the resonant state of vibrations of the ultrasonic LT horn 4 and a horn tip 9, which would otherwise degrade the bonding accuracy of the workpieces W.

In addition, a plurality of protrusions P are provided at the bonding part 21b. The protrusions P are disposed at equal intervals on the bonding part 21b and are structures for reliably bonding the workpieces W by pressing the workpieces W from above. The protrusions P may be provided at the above-described horn tips 6 and 16 to 20.

FIG. 10 is a side view of the above-described horn tip 6 when attached to the ultrasonic LT horn 4.

The horn tip 6 is preferably attached such that the tip surface of the bonding part 6b and the tip surface of the tip part 4b of the ultrasonic LT horn 4 are flush. Accordingly, it is possible to easily perform position adjustment between the horn tip 6 and the workpieces W during bonding of the workpieces W. Note that the attachment position of the horn tip 6 may be on the rear end side in an axial direction of the ultrasonic LT horn 4, which will be described later in detail.

Typically, when the workpieces W are bonded by the ultrasonic bonding device 1, the efficiency of the vibration amplitude of ultrasonic vibration needs to be increased. Thus, the natural frequency (resonance frequency) of the horn tip 6 is adjusted to a value substantially equal to the natural frequency of the ultrasonic LT horn 4.

However, in a case where the natural frequency of the L-shaped horn tip 6 is adjusted to the natural frequency of the ultrasonic LT horn 4, a phenomenon (phase inversion phenomenon) where when the tip part 4b of the ultrasonic LT horn 4 is displaced to the right by vibration, the horn tip 6 (bonding part 6b) is displaced in the opposite direction is known. Accordingly, a gap is generated between the ultrasonic LT horn 4 and the horn tip 6 and vibration of the bonding part 6b of the horn tip 6 becomes unstable, which degrades the bonding accuracy of the workpieces W.

As a countermeasure to the phenomenon, it is preferable to adjust the length of the bonding part 6b from the upper surface side of the bottom plate part 6a. Thus, it is needed to measure the length of the horn tip 6 with which the resonant state of the horn tip 6 and the ultrasonic LT horn 4 occurs when the horn tip 6 is attached to the ultrasonic LT horn 4.

FIG. 11 illustrates the ultrasonic LT horn 4 and the bonding part 6b of the horn tip 6. The length h of the bonding part 6b from the upper surface side of the bottom plate part 6a when the natural frequency f1 of the ultrasonic LT horn 4 and the natural frequency f2 of the horn tip 6 are substantially equal to each other is measured, and this length (resonant length) is denoted by L. In this state, the ultrasonic LT horn 4 and the horn tip 6 vibrate as one vibration body.

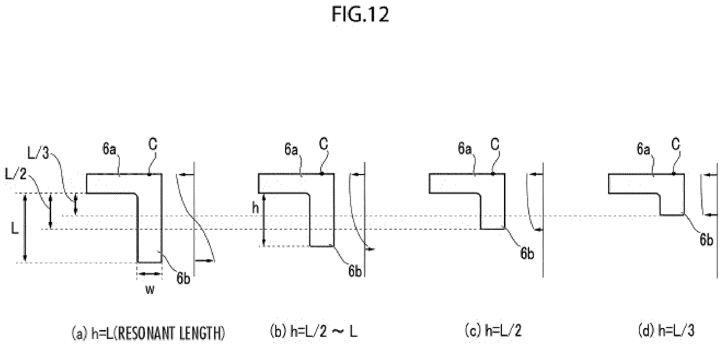

With the resonant length L, when the ultrasonic LT horn 4 is displaced in one direction as illustrated with a waveform in FIG. 12 (a), a tip part of the bonding part 6b of the horn tip 6 is displaced in the opposite direction to the one direction. Specifically, point C of the ultrasonic LT horn 4 in the drawing and the tip part vibrate in the opposite phases. Accordingly, large force is applied to point C and a gap is potentially generated between the ultrasonic LT horn 4 and the horn tip 6. Note that the ratio h/w = 2.71 is obtained as an actual value, where w = 7 (mm) represents the thickness of the bonding part 6b and h (L) = 19 (mm) represents its length.

Next, the length h of the bonding part 6b of the horn tip 6 is shortened to differentiate the natural frequencies f1 and f2. When the bonding part 6b is shortened, the natural frequency f2 of the horn tip 6 becomes high. FIG. 12 (b) illustrates a case where the length h of the bonding part 6b is set to L/2 to L. Vibration of the tip part of the bonding part 6b is smaller than with the resonant length L although the vibration is in the opposite phase. In this case, the ratio h/w is 2.00, where the length h is, for example, 14 (mm) for the thickness w = 7 (mm) of the bonding part 6b.

FIG. 12 (c) illustrates a case where the length h of the bonding part 6b of the horn tip 6 is further shortened and set to L/2. In this case, point C is a vibration node (point of zero amplitude), resolving phase inversion between point C of the ultrasonic LT horn 4 and the tip part of the bonding part 6b of the horn tip 6. Thus, the workpieces W can be bonded by the ultrasonic bonding device 1 with this condition. However, vibrations with amplitudes of different magnitudes occur at point C and the tip part of the bonding part 6b. In this case, the ratio h/w is 1.36, where the length h (L/2) is 9.5 (mm) for the thickness w = 7 (mm) of the bonding part 6b.

FIG. 12 (d) illustrates a case where the length h of the bonding part 6b of the horn tip 6 is further shortened and set to L/3. Under this condition, point C and the tip part of the bonding part 6b of the horn tip 6 vibrate in the same direction with amplitudes of substantially equal magnitudes. In this case, the ratio h/w is 0.90, where the length h (L/3) is 6.3 (mm) for the thickness w = 7 (mm) of the bonding part 6b.

Depending on, for example, the shape of the ultrasonic LT horn 4 and existence of a thickened part, the length h of the bonding part 6b of the horn tip 6 when the thickness w of the bonding part 6b is constant is preferably equal to or shorter than half (1/2) of the resonant length L with which the ultrasonic LT horn 4 and the horn tip 6 resonate, and is more preferably 1/3 to 1/2. The ratio h/w of the length h to the thickness w of the bonding part 6b is preferably equal to or smaller than 1.5 (0 < h/w ≤ 1.5), and under this condition, it is possible to prevent generation of the gap between the ultrasonic LT horn 4 and the horn tip 6.

The length h of the bonding part 6b for the same phase can be checked through vibration analysis by gradually shortening the bonding part 6b from the resonant length L, and thus it is advisable to conduct an actual trial. Note that the resonant length L increases as the thickness w of the bonding part 6b increases.

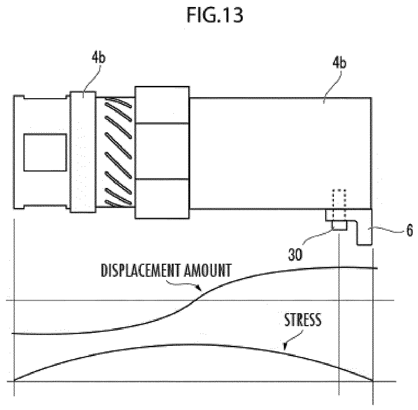

The attachment position of the horn tip 6 in the axial direction of the ultrasonic LT horn 4 will be described with reference to FIG. 13.

As illustrated in FIG. 13, the horn tip 6 is attached at a position where an end face of the bonding part 6b and an end face of the tip part 4b of the ultrasonic LT horn 4 are flush. Since the vicinity of a central part of the tip part 4b of the ultrasonic LT horn 4 in the axial direction serves as a vibration node, the amount of displacement during vibration is small but stress from vibration (tensile-compressive stress) is large. If the horn tip 6 is attached at a position where stress is large, the screw holes 41 and 42 of the tip part 4b slightly expand when the ultrasonic LT horn 4 is displaced in the extending direction.

On the other hand, a bonding surface between the cylindrical part 4a and the tip part 4b of the ultrasonic LT horn 4, and the end face of the bonding part 6b are vibration antinodes where the amount of displacement during vibration is large and stress is small. Thus, the screws 30 that fix the horn tip 6 are preferably provided at positions on the ultrasonic LT horn 4 where stress is relatively small. For example, positions where stress at parts corresponding to the screws 30 is equal to or smaller than 30% of the maximum value are more preferable.

Since the screws 30 are attached at positions where stress is relatively small (positions of vibration antinodes), expansion of the screw holes 41 and 42 of the ultrasonic LT horn 4 is prevented so that a screw loosening phenomenon does not occur. For the above-described reason, the horn tip 6 may be provided at a predetermined position on the tip part 4b where stress is relatively small.

The present invention is not limited to the above-described embodiment but may be achieved in various kinds of manners without departing from its scope.

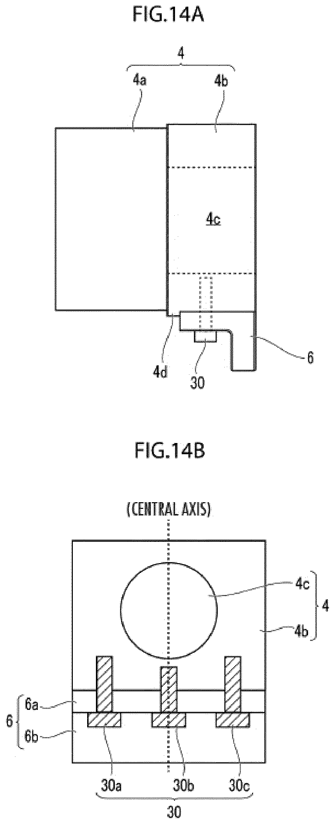

Since the tip part 4b of the ultrasonic LT horn 4 of the present embodiment is provided with the circular hole 4c (refer to FIG. 14A), the screw holes are short, which leads to insufficient fixation of the horn tip 6 to the ultrasonic LT horn 4. Furthermore, the surface of the tip part 4b where the screw holes are provided is thin, which potentially causes cracks in the tip part 4b. For example, in a case where the horn tip 6 with three through-holes is attached to the tip part 4b of the ultrasonic LT horn 4, a screw hole corresponding to the position of a screw 30b needs to be shortened, and thus fastening force of the screw 30b is insufficient in some cases (refer to FIG. 14B).

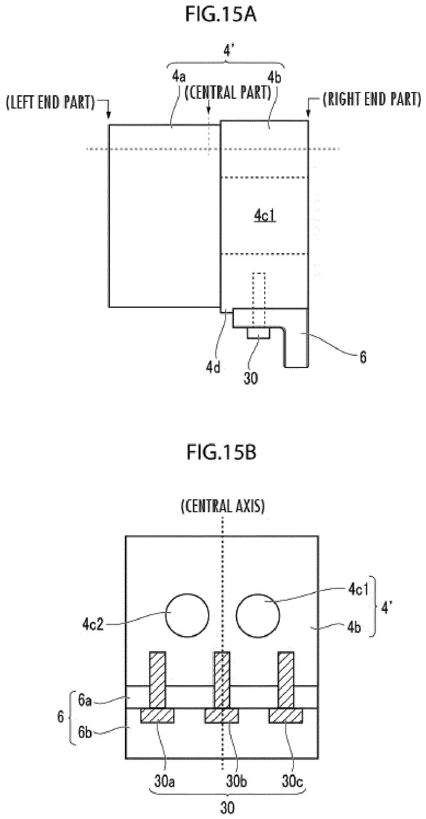

Thus, the tip part 4b of the ultrasonic LT horn 4 may have a form (ultrasonic LT horn 4') with two circular holes 4c1 and 4c2 having diameters smaller than those of the circular hole 4c (refer to FIG. 15A).

As illustrated in FIG. 15B, a screw hole corresponding to the screw 30b is formed between the two circular holes 4c1 and 4c2, and thus the same screw fastening force as with the other screw holes is obtained. Moreover, the horn tip 6 is fixed by three screws 30a to 30c, and thus the horn tip 6 can be reliably attached to the tip part 4b of the ultrasonic LT horn 4'.

The form of the tip part 4b of the ultrasonic LT horn 4' also affects the vibration amplitude in the longitudinal and torsional directions. Typically, it is known that the vibration amplitude becomes larger as the area of the tip part 4b of the ultrasonic LT horn 4' and its second polar moment of area are reduced.

The longitudinal amplitude increases as the ratio (A/B) of the cross-sectional area (A) of a part from the rear end (left end part in FIG. 15A) of the ultrasonic LT horn 4' to its central part to the cross-sectional area (B) of a part from the central part to the rear end (right end part in the drawing) increases. Thus, as the cross-sectional area of the tip part 4b of the ultrasonic LT horn 4' is reduced, the value of the ratio (A/B) increases and longitudinal vibration increases. This leads to amplitude expansion in the torsional direction.

The second polar moment of area of the tip part 4b of the ultrasonic LT horn 4' is given by (the second polar moment of area of a rectangle part of the tip part 4b) - (the second polar moment of area of the two circular holes of the tip part 4b). Moreover, the second polar moment of area of the circular holes 4c1 and 4c2 increases with separation from the central axis of the tip part 4b (because of longer arms).

The torsional amplitude increases as the ratio (C/D) of the second polar moment of area (C) of the part from the rear end (left end part in FIG. 15A) of the ultrasonic LT horn 4' to its central part to the second polar moment of area (D) of the part from the central part to the rear end (right end part in the drawing) increases. Thus, it is possible to increase the torsional amplitude by disposing the circular holes 4c1 and 4c2 of the tip part 4b at a certain interval.

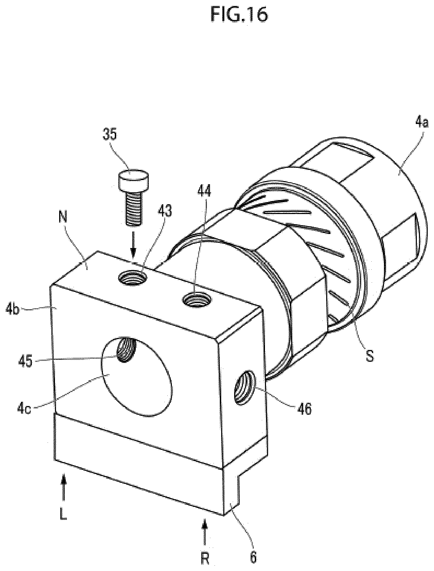

As illustrated in FIG. 16, screw holes 43 and 44 may be provided in a horizontally long surface N (on a side opposite the attachment surface M for the horn tip 6) of the tip part 4b of the ultrasonic LT horn 4 so that a screw-type balancer 35 ("vibration adjustment member" of the present invention) can be detachably attached.

In conventional cases, when a horn that is large in the width direction in a front view, such as the ultrasonic LT horn 4, is vibrated under application of static pressure, the amplitude sometimes differs between right and left end parts of the horn tip 6. This is thought to be because of distortion deformation that occurs at the end parts due to superposition of different vibration modes. If bonding is performed in this state, the bonding strength of the workpieces W differs between the end parts of the horn tip 6 in some cases.

As a countermeasure, the balancer 35 is attached to the surface N of the tip part 4b of the ultrasonic LT horn 4 for adjustment to equalize the vibration amplitude between the right and left end parts of the horn tip 6. Specifically, the balancer 35 that serves as a weight is attached on a side where the vibration amplitude is large. The balancer 35 may be constituted by a screw and a washer. In this case, the outer diameter of the washer is preferably larger than the diameter of the screw head.

When the vibration amplitude at the left end ("L" in the drawing) of the horn tip 6 is larger than the vibration amplitude at the right end ("R" in the drawing), the balancer 35 can be attached to the screw hole 43 on the left side to equalize the vibration amplitude between the right and left end parts. When the vibration amplitude at the right end of the horn tip 6 is larger than the vibration amplitude at the left end, the balancer 35 can be attached to the screw hole 44 on the right side.

In addition to the surface N, the balancer 35 may be attached to a screw hole 45 or 46 in a side surface of the tip part 4b of the ultrasonic LT horn 4, where the balancer 35 does not interfere with the horn tip 6. Alternatively, a plurality of balancers 35 may be attached to the screw holes 43 to 46 for adjustment.

### Reference Signs List

1 ... ultrasonic bonding device, 2 ... ultrasonic oscillator, 3 ... ultrasonic booster horn, 3a ... flange part, 4, 4' ... ultrasonic LT horn, 4a ... cylindrical part, 4b ... tip part, 4c ... circular hole, 4d ... convex part, 6,16, 17, 18, 19, 20, 21 ... horn tip, 6a, 16a, 17a, 18a, 19a, 20a, 21a ... bottom plate part, 6b, 16b, 17b, 18b, 19b, 20b, 21b ... bonding part, 7 ... anvil, 8 ... oscillation device, 10 ... pressurization device, 12 ... sensor, 13 ... control device, 17c, 19c, 20c ... thickened part, 21c ... rib, 30 ... screw, 35 ... balancer, 41 to 46 ... screw hole, 61, 62, 161, 162, 171, 172, 181 to 184, 191 to 193, 201 to 212 ... through-hole, 63, 173, 194 ... groove part, P ... protrusion, S ... diagonal slit, W ... workpiece.

## Claims

1. A horn tip used to bond workpieces by ultrasonic bonding, the horn tip comprising:
a bottom plate part provided with a plurality of through-holes for passing screws; and
a bonding part vertically protruding from the bottom plate part, wherein
a ratio h/w of a length h of the bonding part from an upper surface side of the bottom plate part to a thickness w of the bonding part is equal to or smaller than 1.5.

2. The horn tip according to claim 1, wherein the bonding part protrudes vertically from one end edge extending in a longitudinal direction of the bottom plate part.

3. The horn tip according to claim 1, further comprising a thickened part having a thickness that gradually increases from the bottom plate part toward a base end part continuous with the bonding part.

4. The horn tip according to any one of claims 1 to 3, wherein the bottom plate part is provided with a groove part on a lower surface side that contacts a surface of an ultrasonic horn.

5. An ultrasonic bonding device comprising:
a horn tip comprising a bottom plate part and a bonding part, the bottom plate part being provided with a plurality of through-holes for passing screws, the bonding part vertically protruding from the bottom plate part, a length of the bonding part from an upper surface side of the bottom plate part being equal to or smaller than half of a resonant length; and
an ultrasonic horn to which the horn tip can be attached, wherein
at least one side surface of a tip part of the ultrasonic horn is provided with screw holes corresponding to the through-holes of the horn tip.

6. The ultrasonic bonding device according to claim 5, wherein the tip part has a rectangular column shape.

7. The ultrasonic bonding device according to claim 5 or 6, wherein
the bonding part protrudes vertically from one end edge extending in a longitudinal direction of the bottom plate part, and
an end face of the tip part and an end face of the bonding part of the horn tip are flush.

8. The ultrasonic bonding device according to claim 5, wherein the screw holes are provided at positions where stress is lower than at a central part of the tip part in an axial direction.

9. The ultrasonic bonding device according to claim 5, wherein a surface of the tip part where the horn tip is attached is provided with a convex part that prevents the horn tip from shifting relative to the tip part.

10. The ultrasonic bonding device according to claim 5, wherein a vibration adjustment member can be detachably attached to any of the screw holes which is provided at a position where the screw hole does not interfere with the horn tip.
